# EUROPÄISCHE PATENTSCHRIFT

(11) **EP 4 058 244 B1**
(45) Veröffentlichungstag und Bekanntmachung des Hinweises auf die Patenterteilung: **01.05.2024**
(21) Anmeldenummer: 20807364.3
(22) Anmeldetag: 13.11.2020
(51) Int. Cl.: B25B 23/10

(54) **ANORDNUNG MIT EINEM WERKZEUG UND MIT EINEM BEFESTIGUNGSMITTEL UND VERFAHREN ZUM BEFESTIGEN EINES BEFESTIGUNGSMITTELS**
ARRANGEMENT WITH A TOOL AND WITH A FASTENING MEANS, AND METHOD FOR FASTENING A FASTENING MEANS
AGENCEMENT COMPORTANT UN OUTIL ET UN MOYEN DE FIXATION, ET PROCÉDÉ DE FIXATION D'UN MOYEN DE FIXATION

(30) Priorität: 17.11.2019 DE 102019007955
(43) Veröffentlichungstag der Anmeldung: 21.09.2022
(73) Patentinhaber: Solinplan UG (Haftungsbeschränkt), 20535 Hamburg (DE)
(72) Erfinder: SHIRZADI, Houtan, 21029 Hamburg (DE)
(74) Vertreter: Groth, Wieland
(86) Internationale Anmeldenummer: PCT/EP2020/082109
(87) Internationale Veröffentlichungsnummer: WO 2021/094567

(56) Entgegenhaltungen:
- WO-A1-99/42735
- WO-A1-2017/106913
- DE-A1- 19 910 676
- DE-A1-102008 029 240

## Beschreibung

Die Erfindung betrifft eine Anordnung mit einem Werkzeug und einem Befestigungsmittel mit einer Längsrichtung, wobei das Werkzeug zum Befestigen des Befestigungsmittels in Längsrichtung in einem Körper ausgebildet ist. Die Erfindung betrifft auch ein Verfahren zum Befestigen eines Befestigungsmittels mit einer Längsrichtung mit einem Werkzeug in einem Körper.

Temporäre Verbindungen zwischen Befestigungsmitteln und Werkzeugen in Form von Schrauben und Schraubendrehern finden in unterschiedlichen Bereichen der Technik sowie bei Gegenständen des alltäglichen Gebrauchs statt.

Beispielsweise stellt das Eindrehen einer Schraube in eine Gewindebohrung eine allgemeine bekannte und technische und alltägliche Situation dar. Eine auf einen Schraubendreher gesetzte Schraube kann sich auf dem Weg zur Gewindebohrung ungewollt vom Schraubendreher bzw. allgemein einem Eindringwerkzeug lösen und dadurch außerhalb des kontrollierten Arbeitsbereiches geraten, z. B. herunterfallen.

Um dem entgegenzuwirken, wird eine Schraube häufig mit Fingern oder z. B. durch magnetische Anziehung einer Schraubendreherspitze gehalten.

Es gibt auch Vorrichtungen, die die Schraube auf dem Schraubendreher sichern sollen.

In der DE 10 2008 029 240 A1 ist ein Schraubendreher mit einer Schraube offenbart, wobei der Schraubendreher einen Vorsprung aufweist, der einen Unterschnitt der Schraube hintergreift und so an der Schraube arretiert werden kann. Dadurch wird ein zufälliges Abrutschen der Schraube verhindert. Nachteilig daran ist, dass die Schraube nicht nach rechts und links in arretierter Position gedreht werden kann.

Die WO 99/42735 betrifft einen Schraubenzieher und eine Schraube, wobei der Schraubenzieher an der Spitze eine Kugel aufweist, die in eine entsprechende Aussparung der Schraube hineingedrückt werden kann, so dass die Schraube am Schraubenzieher arretiert bleibt. Nachteilig daran ist, dass der Schraubenzieher mit Kraft von der Schraube wieder abgezogen werden muss.

Die DE 199 10 676 A1 offenbart einen Schraubenzieher mit einer Schraube. Der Schraubenzieher weist eine Hülse auf, an deren vorlaufender Seite zwei Rasthaken abstehen. Die Hülse umgibt einen Außensechskant. Außensechskant und Rasthakten wirken mit einem Innensechskant und Hinterschneidungen einer Schraube zusammen. Außensechskant und Hülse sind beweglich zueinander ausgestaltet. Der Aufbau des Schraubenziehers ist relativ komplex, da er einen internen Drehmechanismus aufweist. Des Weiteren müssen Schraubenzieher und Schraube nachteiligerweise mit zwei Händen bedient werden.

Die WO 2017/106913 A1 offenbart einen Schraubenzieher mit einer drehbaren Platte und eine Schraube mit einer Aussparung, in der die Platte Unterschneidungen hintergreift. Die Anordnung ist nachteiligerweise mechanisch relativ kompliziert und aufwendig gestaltet und daher auch fehleranfällig.

In der DD 232665 A1 wird z. B. ein Schraubendreher beschrieben, der durch Spreizung seiner zweiteiligen Klinge nach Einbringung in den Schraubenschlitz die Verbindung zur Schraube sicherstellen soll.

In der DD 124328 A1 wird ein Schraubenhalter aus einer keilförmigen Hülse beschrieben, die an den Keilflächen gegensinnig S-förmig gebogene Federn aufweist. Der Schraubenhalter, aufgesetzt auf einen entsprechenden Schraubendreher greift nach dem Aufsetzen der Schraube auf den Schraubendreher mit den Federenden unter den Schraubenkopf und hält die Schraube dadurch am Schraubendreher.

Aus der EP 2 314 418 A1 sind eine Schraube und ein Drehwerkzeug zum Drehen einer Schraube bekannt. Dabei hintergreifen Vorsprünge an einer Schlitzklinge Ausnehmungen in einem Schraubenkopf. Nachteilig daran ist, dass sich nach Durchführen einer einfachen Rückwärtsbewegung in Form einer Drehbewegung Schraubenkopf und Schraubendreher voneinander lösen.

In der WO 00/20766 sind eine Schraube und ein Schraubendreher für eine abrutschsichere Schraube offenbart, wobei auch hier Vorsprünge eines Schraubendrehers in Schlitze des Schraubenkopfes eingedreht werden und den Schraubenkopf hintergreifen.

Ein ähnliches Prinzip ist auch in der US 5,868,049 offenbart sowie in der US 5,353,667 offenbart.

Nachteilig an dem genannten Stand der Technik ist in allen Fällen, dass zwar ein zufälliges Lösen der Schraube vom Schraubendreher erschwert wird, doch wenn die Schraube eine Drehung entgegen ihrer Eindrehrichtung durchführt, diese dennoch vom Schraubendreher durch diese einfache Rückwärtsbewegung herunterfallen kann.

Es bestehen häufig Schwierigkeiten, eine widerstandsfähige Stabilität der Verbindung zwischen Schraube und Schraubendreher während eines Arbeitsprozesses aufrechtzuerhalten. Wenn beispielsweise Schraube und Schraubendreher sehr klein dimensioniert sind, also sich im Millimeterbereich befinden, ist auch die Klinge des Einbringwerkzeuges entsprechend klein dimensioniert. Es müssen dann Formteile, die die Verbindung stabilisieren sollen, wie beispielsweise in der DD 214328 A1, entsprechend klein dimensioniert sein. Dies führt einerseits zu einer schwierigen Handhabung und ist andererseits ungünstig für die Stabilität der Verbindung, z. B. gegenüber plötzlich auftretenden Scher- und Abzugskräften. Problematisch ist insbesondere die Verbindung von Schrauben und Einbringwerkzeugen bei bestimmten Behandlungen, Operationen in der Medizin, beispielsweise im Bereich der Zahnmedizin im Bereich der oralen Implantologie. In diesem Gebiet der Zahnheilkunde werden sogenannte enossale Implantate, also künstliche Zahnwurzeln, meistens aus Titan, in den Kieferkammknochen eingesetzt und anschließend für die Einheilphase mit kleinen Schrauben abgedeckt. Später werden der von diesem Implantat zu tragende Zahnersatz oder Teile davon mit weiteren anderen kleinen Schrauben, sogenannten Prothetikschrauben, auf diesen Implantaten fixiert. In verschiedenen Phasen vor Fertigstellung des Zahnersatzes müssen daher mehrfach kleine Schrauben, oft nur wenige Millimeter groß, innerhalb der Mundhöhle in Implantate eingeschraubt und wieder herausgedreht werden.

Die sichere Handhabung solcher kleinen Schrauben ist schon aufgrund der engen räumlichen Verhältnisse der Mundhöhle schwierig. Diese Schwierigkeit wird durch die Bewegungen der Kiefer sowie der Wangen- und Zungenmuskulatur erhöht. Der Behandler muss aber sicherstellen, dass solche Schrauben während der Behandlung in der Mundhöhle unter seiner Kontrolle bleiben. Üblicherweise kommt der Halt zwischen dem Schraubenkopf und dem Einbringwerkzeug über kraftschlüssige Verbindungen zustande, wie z. B. die Verbindung über einen Innen- und Außensechskant. Problematisch sind dabei z. B. Scher- und Abzugskräfte, die bei der Arbeit im engen Raum der Mundhöhle durch plötzliche Bewegungen der Zunge, der Wangen usw. häufig impulsartig auftreten können und auf die Schraube wirken können, die noch nicht im inneren Gewinde des Implantates eingedreht ist. Dies kann dazu führen, dass sich die Schraube vom Einbringwerkzeug, z. B. einem speziellen Sechskantschlüssel, plötzlich löst und der Behandler die Kontrolle über die Schraube verliert und die Schraube z. B. verschluckt wird oder in die Atemwege gerät. Eine solche Situation muss der Behandler verhindern.

Eine Sicherung der Schrauben mit daran angebrachten Bändern, wie z. B. Zahnseide, ist schwierig und aufwendig u. a. wegen der kleinen Dimensionen der Schrauben von wenigen Millimetern und der Implantataufbauten, deren engen Durchlass die Schrauben passieren müssen, um in die Gewindebohrung im Implantatinneren eingedreht werden zu können. Dieser enge Durchlass erschwert auch andere Sicherungsmaßnahmen, die die Schraube auf dem Einbringwerkzeug stabilisieren sollen und dabei von außen auf die Schraube greifen würden. Für diese wäre kaum Platz, und die Passage der Schraube durch den engen Durchlass wäre erschwert. Bei den vorgenannten Behandlungsabläufen ist eine feinmotorische und präzise Führung der Schraube bzw. des Einbringwerkzeugs erforderlich. Maßnahmen für die Stabilität der Verbindung von Schraube und Schraubendreher oder für die Sicherung der Schraube, die während der Behandlung in der Mundhöhle zusätzliche Kraftanwendungen oder spezielle Hand- bzw. Fingerbewegungen erfordern, sind daher ungünstig für die Behandlung.

Auch in anderen Bereichen der Medizin sind vergleichbare Umstände mit den entsprechenden Risiken gegeben, wie etwa bei der Verschraubung von Metallplatten am Knochen zur Fixierung und Stabilisierung von Knochenbrüchen, der sogenannten Plattenosteosynthese.

Es ist daher Aufgabe der vorliegenden Erfindung, eine höhere Stabilität von kurzfristigen Verbindungen zwischen Befestigungsmittel und Werkzeug durch eine entsprechende Anordnung von Werkzeug und Befestigungsmittel zu erreichen und ein Verfahren zur Befestigung eines Befestigungsmittels zur Verfügung zu stellen.

Die Aufgabe wird hinsichtlich der Anordnung durch eine Anordnung mit den Merkmalen des Anspruchs 1 gelöst.

Die erfindungsgemäße Anordnung mit einem Werkzeug mit einem Befestigungsmittel, das eine Längsrichtung aufweist, wobei das Werkzeug zum Befestigen des Befestigungsmittels in Längsrichtung in einem Körper ausgebildet ist, wobei der Begriff des Befestigungsmittels hier weit auszulegen ist, insbesondere kann das Befestigungsmittel über ein Gewinde verfügen, das rechts und links gedreht sein kann oder auch über eine andere Form der Verankerung in einem Körper.

Vorzugsweise handelt es sich bei dem Befestigungsmittel um eine Schraube, vorzugsweise um eine Schraube, die in enossale Implantate eingedreht wird, insbesondere eine Prothetikschraube oder Abdeckschraube. Bei dem Körper kann es sich um verschiedene Materialien handeln, beispielsweise Holz, Stahl, Titan o. Ä.

Das Werkzeug weist eine Klinge auf. Es kann sich bei dem Werkzeug um einen Schraubendreher mit einer Klinge handeln, wobei die Klinge nur in Längsrichtung in die Schraube eingeführt werden kann.

Erfindungsgemäß weist das Werkzeug eine Klinge mit einem ersten Halteelement und einem zweiten Halteelement auf, und die Schraube weist einen ersten Halteabschnitt mit einem komplementären ersten Halteelement und einen zweiten Halteabschnitt mit einem komplementären zweiten Halteelement auf, und die Klinge ist in das Befestigungsmittel, insbesondere einen Kopf des Befestigungsmittels, vorzugsweise in der Längsachse des Befestigungsmittels einführbar, und im ersten Halteabschnitt wirken das erste Halteelement und das komplementäre erste Halteelement zusammen, und zwar derart, dass in Längsrichtung eine Translationsbewegung, vorzugsweise eine strenge Translationsbewegung in Längsrichtung der Klinge unterbrochen oder blockiert ist, wobei hier unter Translationsbewegung eine strenge gradlinige Relativbewegung zwischen Klinge und Kopf des Befestigungsmittels bezeichnet wird, die sich vorzugsweise genau in Längsrichtung des mit der Schraube ineinandergefügten Werkzeugs erstreckt.

Erfindungsgemäß wirken in einem zweiten Halteabschnitt das zweite Halteelement und das komplementäre zweite Halteelement zusammen, und zwar derart, dass eine Drehbewegung der Klinge auf das Befestigungsmittel übertragbar ist und das Befestigungsmittel in dem Körper befestigbar, vorzugsweise die Schraube in den Körper einschraubbar ist.

Die Erfindung macht von der Idee Gebrauch, ein Befestigungsmittel und ein Werkzeug zum Einschrauben der Schraube, vorzugsweise einem Schraubendreher, derart miteinander temporär zu verbinden, dass zwei Wirkmechanismen räumlich und zeitlich getrennt voneinander zum Einsatz kommen.

Beim Einführen der Klinge des Werkzeugs in einen Kopf des Befestigungsmittels, vorzugsweise den Schraubenkopf der Schraube, wirken zuerst das erste Halteelement und das komplementäre erste Halteelement zusammen. Dieses geschieht in dem ersten Halteabschnitt. Nach dem Durchfahren des ersten Halteabschnitts mit einem vorlaufenden Ende der Klinge wirken in einem sich anschließenden zweiten Halteabschnitt das zweite Halteelement und das komplementäre zweite Halteelement zusammen. Das zweite Halteelement und das komplementäre zweite Halteelement sind dazu bestimmt, die Schraube in ein Innengewinde einzuschrauben, während das erste Halteelement und das komplementäre erste Halteelement im ersten Halteabschnitt dazu bestimmt sind, eine nicht triviale, d. h. nicht rein translatorische Bahn zu durchlaufen, wodurch eine Umkehrbewegung dieser Bahn, nur durch die ein Abfallen des Befestigungsmittels von der Klinge des Werkzeugs möglich wäre, deutlich erschwert wird.

Vorzugsweise ist ein Außenumfang des zweiten Halteelementes in einem Querschnitt senkrecht zur Längsrichtung mehreckig ausgebildet, und ein Innenumfang des komplementären zweiten Halteelementes ist als komplementäre Fläche ausgebildet. Bei dem Außenumfang des zweiten Halteelementes kann es sich um einen Außenmehrkant handeln, vorzugsweise einen Außenvierkant, -fünfkant oder -sechskant oder um ein höherkantiges Halteelement, das in Längsrichtung, abgesehen von der Position des ersten Halteelements gleichbleibend ausgebildet ist, während umgekehrt die komplementäre Fläche als Innenmehrkant, vorzugsweise Innendreikant, -vierkant oder -fünfkant oder als höherkantige Innenfläche, ausgebildet sein kann, gleich große Innenmaße wie die Außenmaße des Außenumfanges des zweiten Halteelements aufweist, so dass das zweite Halteelement in das komplementäre zweite Halteelement eingeführt werden kann und in Länagsrichtung eine kraftschlüssige Verbindung ausbildet; beispielsweise wird ein Außensechskant unter Krafteinwirkung in einen Innensechskant eingeführt und bildet dort zunächst eine kraftschlüssige Verbindung aus. Durch Drehbewegung des Werkzeuges wird eine Kraft auf die Innensechskantfläche ausgeübt. Die Verbindung von Innenmehrkant und Außenmehrkant in Drehrichtung ist daher vorwiegend formschlüssig. Die Vorgehensweise lässt sich auch auf alle anderen Ausführungsformen des zweiten Halteelements und zweiten komplementären Halteelements übertragen.

Erfindungsgemäß ist die Klinge nur in das Befestigungsmittel einführbar, wenn das erste Halteelement und das komplementäre erste Halteelement zusammenwirken. Vorteilhafterweise soll ein Umgehen der Wechselwirkung zwischen erstem und komplementärem ersten Halteelement verhindert werden. Vorzugsweise wirken das erste Halteelement und das komplementäre erste Haltelement über die gesamte Ausdehnung des ersten Halteabschnitts zusammen, wobei die Ausdehnung des ersten Halteabschnitts durch die Ausdehnung des komplementären ersten Halteelements in Längsrichtung außerhalb des zweiten Halteabschnitts bestimmt ist, während eine Ausdehnung des zweiten Halteabschnitts durch eine Ausdehnung des komplementären zweiten Halteelements in Längsrichtung bestimmt ist.

Besonders bevorzugt weist das erste Halteelement einen Dorn auf, und das komplementäre erste Halteelement weist eine entlang einer Innenwandung des ersten Halteabschnittes verlaufende Rinne auf, entlang derer der Dorn während des Einsteckens der Klinge in das Befestigungsmittel führbar ist. Der Dorn wird auf die durch die Rinne gebildete Bahn in seine Bewegung gezwungen.

Günstigerweise ist ein Innendurchmesser, vorzugsweise jeder Innendurchmesser, des ersten Haltelabschnitts in Bereichen ohne das komplementäre erste Haltelement kleiner als eine Ausdehnung des zweiten Halteelements zuzüglich eines Durchmessers des ersten Halteelements. Insbesondere ist ein Innendurchmesser des ersten Halteabschnitts in Bereichen, in denen keine Rinne vorgesehen ist, kleiner als ein Außendurchmesser des Außenmehrkants zuzüglich der Ausdehnung des wenigstens einen Dornes. Vorteilhafterwiese kann der Dorn so nicht an der Rinne vorbei in den ersten Halteabschnitt eingeführt werden.

Vorzugsweise weist der Mehrkant im ersten Halteabschnitt ein Spiel auf, das insbesondere zu Beginn des Einführens eine Kippbewegung des Mehrkants im ersten Halteabschnitt gestattet. Das Spiel ist aber nur so groß bemessen, dass auch durch Kippen der Klinge beim Einführen der Dorn keinen Umweg um einen Rinneneingang herum finden kann und nicht aus der KippStellung der Klinge heraus, unter Umgehung des Rinneneinganges, in die Rinne eingleiten kann.

Die Bahn ist vorzugsweise etwas komplex ausgebildet, vorzugsweise ist der Verlauf der Rinne S-förmig ausgebildet, so dass die Klinge die S-förmig ausgebildete Bewegung durchführen muss. Natürlich sind auch andere Bahnformen denkbar, etwa wellige Bahnen, gezackte Bahnen o. Ä. Vorzugsweise ist die Bahn so ausgebildet, dass die Klinge eine Drehbewegung und translatorische Bewegung, vorzugsweise eine Hin-und-her-Bewegung durchführen muss, so dass ein zufälliges Rückwärtsdurchführen der Bewegung erschwert wird.

Günstigerweise verläuft die Rinne im zweiten Halteabschnitt in Längsrichtung. Dadurch wird es ermöglicht, das zweite Halteelement in das komplementäre zweite Halteelement einzufügen, ohne dass das erste Halteelement in Form eines Dornes der Verbindung der Im zweiten Aspekt wird die Aufgabe durch ein Verfahren mit den Merkmalen des Anspruchs 8 gelöst.

Das Verfahren ist mit einer der oben genannten Anordnungen durchführbar, umgekehrt ist jede der oben genannten Anordnungen für eines der nachfolgenden Verfahren geeignet. Das für die Anordnung Gesagte gilt auch für das Verfahren als offenbart.

Das Verfahren dient zum Befestigen eines Befestigungsmittels mit einer Längsrichtung mittels eines Werkzeugs in einem Körper. Das Werkzeug weist ein erstes Halteelement und ein zweites Halteelement auf und die Schraube einen ersten Halteabschnitt mit einem komplementären ersten Halteelement und einen zweiten Halteabschnitt mit einem komplementären zweiten Halteelement.

Verfahrensgemäß wird das Werkzeug in einer nichttranslatorischen Bewegung durch den ersten Halteabschnitt geführt, und im ersten Halteabschnitt wirken das erste Halteelement und das komplementäre erste Halteelement zusammen, damit ein Abfallen des Befestigungsmittels vom Werkzeug erschwert wird, der erste Halteabschnitt lässt nur einen geringfügigen Spielraum für ein Abweichen der Werkzeuglängsachse aus der Längsachse des Befestigungsmittels unter Beibehaltung der Verbindung zwischen dem ersten und dem komplementären ersten Halteelement zu, und das Werkzeug wird danach in den zweiten Halteabschnitt eingeführt, und dort wirken das zweite Halteelement und das komplementäre zweite Halteelement zusammen, und das Werkzeug wird gedreht, und eine Drehbewegung des Werkzeugs wird auf das Befestigungsmittel übertragen und das Befestigungsmittel in dem Körper befestigt.

Vorzugsweise wird eine Schraube als Befestigungsmittel gewählt und das Befestigungsmittel im Körper festgeschraubt.

Erfindungsgemäß durchläuft das Verfahren zur zeitweiligen lösbaren Verbindung des Werkzeugs mit dem Befestigungsmittel im Wesentlichen zwei Verfahrensschritte. Zum einen durchläuft die Klinge des Werkzeugs einen ersten Halteabschnitt und vorzugsweise danach einen zweiten Halteabschnitt, wobei im ersten Halteabschnitt ein erstes und ein komplementäres erstes Halteelement zusammenwirken und in einem zweiten Halteabschnitt vorzugsweise zusätzlich ein zweites und ein komplementäres zweites Halteelement zusammenwirken, wobei das erste und das komplementäre erste Halteelement eine nichttranslatorische Relativbewegung erzwingen und das zweite und das komplementäre zweite Halteelement vorzugsweise bei einer Drehbewegung eine kraftschlüssige Verbindung ausbilden, die in besonders stabiler Weise die Kraft der Drehbewegung des Werkzeugs auf das Befestigungsmittel überträgt. Günstigerweise wird die Klinge des Werkzeugs in einer S-förmigen Bewegung durch den ersten Halteabschnitt geführt. Es sind jedoch auch andere Bewegungsmuster, die nicht rein translatorisch sind und sich in Längsrichtung erstrecken, denkbar, beispielsweise auch wellenförmige Bewegungen, zickzackförmige Bewegungen oder ähnliche Bewegungen. Günstigerweise wird das Werkzeug in einer S-förmigen Bewegung, die auch während des Durchlaufens eine kurze translatorische Rückbewegung umfasst, durch den ersten Halteabschnitt geführt. Dadurch wird ein Abrutschen der Schraube vom Werkzeug in besonderer Weise im ersten Halteabschnitt erschwert.

Die Erfindung wird anhand eines Ausführungsbeispiels in fünf Figuren beschrieben. Dabei zeigen:
Fig. 1 eine Schrägansicht auf einen Prothetikschraubenkopf mit Innensechskant und einer in einer Innenwandung eingearbeiteten Rinne,
Fig. 2 eine Schnittansicht entlang der Linie II - II in Figur 1,
Fig. 3a einen Schraubendreher mit Außensechskant und zwei Dornen,
Fig. 3b eine um 90° gegenüber der Fig. 3a gedrehte Ansicht des Schraubendrehers,
Fig. 4 Seitenansicht, teilweise als Schnittansicht einer in die Schraube eingeführten Klinge des Schraubendrehers.

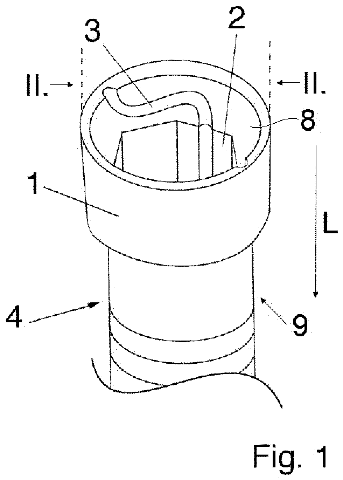

Fig. 1 zeigt einen Schraubenkopf 1 einer erfindungsgemäßen Schraube 4 mit einer Innenwandung und einer Außenwandung, die im kopfabseitigen Abschnitt in ein Gewinde übergeht.

In die Innenwandung des Schraubenkopfes 1 sind zwei sich gegenüberliegende, vorzugsweise konkav ausgebildete Rinnen 3 eingeformt. Die Rinnen 3 weisen in einem oberen kopfseitigen ersten Halteabschnitt 8 eine S-förmige Verschwingung auf. Die beiden Rinnen sind um 180° um eine Mittelachse des Schraubenkopfes 1 drehbar aufeinander identisch abbildbar. Die S-förmige Rinne 3 ist derart ausgebildet, dass sie am Beginn des ersten Halteabschnitts 8 einen im Wesentlichen in einer Längsrichtung L der Schraube 4 verlaufenden Verlauf aufweist und dann eine Verschwingung in Verlaufsrichtung nach links ausbildet, wobei die Rinne 3 dann ein Stück weit in Richtung des oberen Endes des Schraubenkopfes 1 zurückgeführt wird, um dann erneut in einer Rechtsschwingung wiederum streng in Längsrichtung L bis zum Ende eines zweiten Halteabschnitts 9 durchzulaufen. Die gegenüberliegende Rinne ist in Fig. 1 bis auf einen Rinneneingang nicht dargestellt,

Ein Durchmesser des ersten Halteabschnittes 8 ist größer als ein Durchmesser des zweiten Halteabschnittes 9. Günstigerweise ist jeder Durchmesser des ersten Halteabschnittes 8 größer als jeder Durchmesser des zweiten Halteabschnittes 9. Der zweite Halteabschnitt 9 ist als Innensechskant 2 ausgebildet, der erste Halteabschnitt 8 ist als Innenzylinder ausgebildet mit zwei in der Zylinderwandung verlaufenden Rinnen 3.

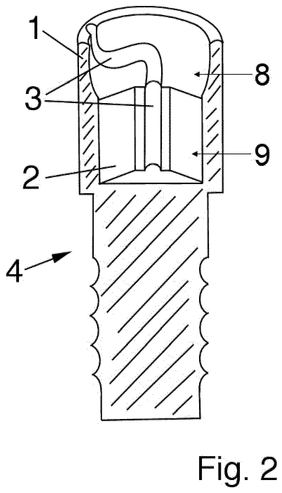

Fig. 2 zeigt die Schraube 4 in einer Schnittansicht. Der Schraubenkopf 1 weist im oberen Bereich den ersten Halteabschnitt 8 und im unteren Bereich den zweiten Halteabschnitt 9 auf. Eine der beiden sich gegenüberliegenden Rinnen 3 ist in der Fig. 2 dargestellt. Der untere in den Körper einzuschraubende Bereich ist als Außengewinde ausgebildet.

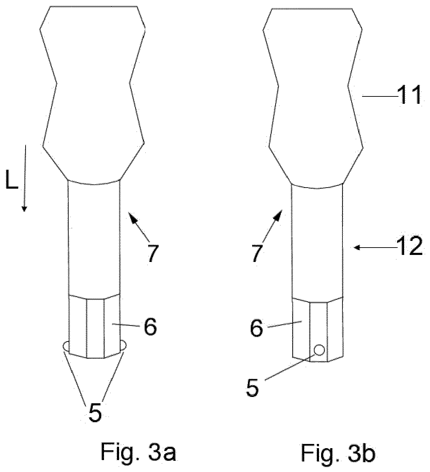

Fig. 3a und Fig. 3b zeigen das Werkzeug in Form eines Schraubendrehers 7 mit einem Schraubendreherkopf 11 und einer Klinge 12. Die Darstellung der Fig. 3a ist um 90° gegenüber der Darstellung der Fig. 3b gedreht. Die Klinge 12 weist ein erstes Halteelement in Form von zwei vorzugsweise halbkugelförmigen Dornen 5 auf sowie ein zweites Halteelement in Form von einem Außensechskant 6. Die Dorne 5 können natürlich auch anders ausgeformt sein. Es können auch zylindrische, tetraederförmige oder sonstige Formen als Dorn 5 verwendet werden. Das zweite Halteelement muss nicht notwendigerweise als Außensechskant ausgebildet sein, es kann auch als Außenvier- oder -fünfkant ausgebildet sein oder auch eine andere Formgebung aufweisen. Die Form sollte jedoch nicht rotationssymmetrisch sein, sondern bei der Ausbildung mit zwei Dornen 5 vorzugsweise 180° rotationssymmetrisch sein.

In der in den Fig. 1 und 2 dargestellten Schraube 4 handelt es sich vorzugsweise um eine Prothetikschraube. Der erfindungsgemäße Schraubendreher, 7 der hier als Außensechskant 6 mit zwei Dornen 5 dargestellt ist, kann in zwei räumlichen Positionen in den Schraubenkopf 1 greifen und in ihn eingeführt werden. Die beiden Positionen sind 180° rotationssymmetrisch.

In beiden Eingriffspositionen greifen die zwei Dorne 5 gleichzeitig in die beiden konkaven Rinnen 3, die in die Schraubenkopfinnenwandung eingeformt sind, ein. Die beiden Rinnen 3 liegen sich gegenüber und sind um 180° gegeneinander gedreht und weisen den in der Fig. 1 dargestellten S-förmig kurvigen Verlauf auf.

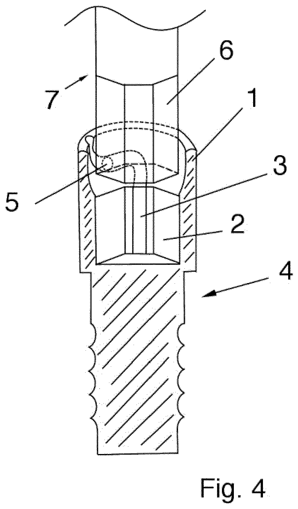

In der Fig. 4 ist dargestellt, wie die Klinge 12 des Schraubendrehers 7 in den Schraubenkopf 1 eingeführt wird. Dabei wird zunächst die Klinge 12 des Schraubendrehers 7 mit den beiden Dornen 5 über den zugehörigen Rinnen 3 positioniert und in einer nicht-translatorischen Bewegung in den ersten Halteabschnitt 8 eingeführt. Der Schraubendreher 7 wird dabei in der durch die S-förmige Gestalt der Rinne 3 vorgegebenen Bahn geführt. Zunächst wird der Schraubendreher 7 zur Schraube hin bewegt und dann in einer Drehung im Uhrzeigersinn wieder ein Stück weit aus dem Schraubenkopf 1 herausgedreht, um dann in einer translatorischen, in Längsrichtung L verlaufenden Bewegung in den zweiten Halteabschnitt 9 eingeführt zu werden. Bezogen auf den kreisförmigen Querschnitt des Schraubenkopfes 1 spannen der Anfang und das Ende der Rinne 3 optimalerweise einen möglichst großen Winkel auf. Dieser ist in dem hier beschriebenen Ausführungsbeispiel zur besseren Darstellbarkeit in den Figuren etwas kleiner als real gewählt. Je größer dieser Winkel ist, d. h. je länger die Bahn der Rinne 3 sich über die Schraubenkopfinnenwandung erstreckt, umso geringer ist das Risiko für eine zufällige bzw. ungewollte Umkehrung dieser Einführbewegung und damit für die Trennung der Verbindung zwischen Klinge 12 und Schraubenkopf 1. Nach dem Eingreifen des Dornes 5 in die Rinnen 3 folgt der Sechskantschraubendreher 7 bei Drehung im Uhrzeigersinn relativ zur Prothetikschraube 4 und um die gemeinsame Längsachse dem kurvigen Verlauf der Rinne 3, und es kommt eine formschlüssige Verbindung zustande. Der Sechskantschraubendreher 7 und die Prothetikschraube 4 nähern sich zum Abschluss der Bewegung im ersten Halteabschnitt 8 einer Position, in der der Außensechskant 6 senkrecht, d. h. in Längsrichtung L, in den Innensechskant 2 des Schraubenkopfes 1 eingesteckt wird, und es entsteht in Längsrichtung eine kraftschlüssige und in Drehrichtung ein formschlüssige Verbindung. Die Rinnen 3 des ersten Halteabschnittes 8 sind in den Wandungen des zweiten Halteabschnittes 9 fortgeführt, damit die Dorne 5 der kraftschlüssigen Sechskantverbindung nicht im Wege stehen. Wenn sich durch plötzliche Scher- bzw. Abzugskräfte, die an der Schraube 4 wirken könnten, z. B. durch plötzliche Zungenbewegungen des Patienten, der Außensechskant 6 des Schraubendrehers vom Innensechskant 2 der Schraube 4 lösen sollte, so wird durch das Ineinandergreifen des Dornes 5 und der Rinne 3 ein plötzliches Abfallen der Schraube 4 vom Schraubendreher 7 verhindert. Die Schraube 4 bleibt locker am Schraubendreher 7 befestigt, und dem Zahnarzt bzw. Anwender bleibt dadurch Zeit, um den den Schraubendreher wieder vollständig in die Schraube einzuführen und die Verbindung im zweiten Halteabschnitt 9 wieder herzustellen. Der Anwender muss also weiterhin die Abläufe im Hinblick auf ein etwaiges Wirken solcher Kräfte sorgfältig verfolgen, um gegebenenfalls schnell zu reagieren. Insgesamt wird durch das Aufeinanderfolgen eines ersten Halteabschnittes 8 und eines zweiten Halteabschnittes 9 die Sicherheit des Einschraubens von Schrauben in ein Außengewinde deutlich erhöht, da die Wahrscheinlichkeit für ein zufälliges Abfallen der Schraube 4 vom Schraubendreher 7 deutlich reduziert wird. Selbst wenn die Verbindung des Außen- und Innensechskants 6, 2 verlorengeht, so bleibt die Schraube 4 doch noch zunächst über das Zusammenwirken von Rinne 3 und Dorn 5 am Schraubendreher 7 angeordnet und fällt beispielsweise bei zahnärztlichen Behandlungen nicht sofort in den Mundraum bzw. Rachen des Patienten.

### Bezugszeichenliste

- 1: Schraubenkopf
- 2: Innensechskant
- 3: Rinne
- 4: Schraube
- 5: Dorn
- 6: Außensechskant
- 7: Schraubendreher
- 8: erster Halteabschnitt
- 9: zweiter Halteabschnitt

- 11: Schraubendreherkopf
- 12: Klinge

- L: Längsrichtung

## Patentansprüche

1. Anordnung mit einem Werkzeug (7) und mit einem Befestigungsmittel (4) mit einer Längsrichtung (L), wobei das Werkzeug (7) zum Einschrauben des Befestigungsmittels (4) in Längsrichtung (L) in einen Körper ausgebildet ist, wobei das Werkzeug (7) eine Klinge (12) mit einem ersten Halteelement (5) und einem zweiten Halteelement (6) aufweist und
das Befestigungsmittel (4) einen ersten Halteabschnitt (8) mit einem komplementären ersten Halteelement (3) und einen zweiten Halteabschnitt (9) mit einem komplementären zweiten Halteelement (2) aufweist und der zweite Halteabschnitt (9) in Längsrichtung (L) vor dem ersten Halteabschnitt (8) angeordnet ist und die Klinge (12) in das Befestigungsmittel (4) einführbar ist und im ersten Halteabschnitt (8) das erste Halteelement (5) und das komplementäre erste Halteelement (3) derart zusammenwirken, dass in Längsrichtung (L) eine Translationsbewegung der Klinge (12) blockiert ist und damit ein Abfallen des Befestigungsmittels (4) vom Werkzeug (7) durch eine Rückwärtsbewegung erschwert ist und im zweiten Halteabschnitt (9) das zweite Halteelement (6) und das komplementäre zweite Halteelement (2) derart zusammenwirken, dass eine Drehbewegung der Klinge (12) auf das Befestigungsmittel (4) übertragbar ist und das Befestigungsmittel (4) in den Körper einschraubbar ist, **dadurch gekennzeichnet, dass** die Klinge (12) nur in das Befestigungsmittel (4) einführbar ist, wenn das erste Halteelement (5) und das komplementäre erste Halteelement (3) zusammenwirken.

2. Anordnung nach Anspruch 1,
**dadurch gekennzeichnet, dass** ein Außenumfang des zweiten Halteelements (6) in einem Querschnitt senkrecht zur Längsrichtung (L) mehreckig ausgebildet ist und ein Innenumfang des komplementären zweiten Halteelements (2) eine komplementäre Form ausbildet.

3. Anordnung nach Anspruch 1 oder 2,
**dadurch gekennzeichnet, dass** das erste Halteelement einen Dorn (5) aufweist und das erste komplementäre Halteelement eine sich entlang einer Innenwandung des ersten Halteabschnitts verlaufende Rinne (3) aufweist, entlang der der Dorn (5) während des Einsteckvorganges führbar ist.

4. Anordnung nach Anspruch 3,
**dadurch gekennzeichnet, dass** ein Verlauf der Rinne (3) S-förmig ausgebildet ist.

5. Anordnung nach Anspruch 3 oder 4,
**dadurch gekennzeichnet, dass** die Rinne (3) im zweiten Halteabschnitt (9) in Längsrichtung (L) verläuft.

6. Anordnung nach einem der vorstehenden Ansprüche,
**dadurch gekennzeichnet, dass** der Dorn (5) an einem Ende der Klinge (12) angeordnet ist.

7. Anordnung nach einem der vorstehenden Ansprüche,
**dadurch gekennzeichnet, dass** das Befestigungsmittel als Schraube (4) ausgebildet ist.

8. Verfahren zum Befestigen eines Befestigungsmittels (4) mit einer Längsrichtung (L) mit einem Werkzeug (7) in einem Körper, wobei das Werkzeug (7) eine Klinge (12) mit einem ersten Halteelement (5) und einem zweiten Halteelement (6) aufweist und das Befestigungsmittel (4) einen ersten Halteabschnitt (8) mit einem komplementären ersten Halteelement (3) und einen zweiten Halteabschnitt (9) mit einem komplementären zweiten Halteelement (2) aufweist,
indem die Klinge (12) in einer nicht-translatorischen Bewegung in den ersten Halteabschnitt (8) eingeführt wird und im ersten Halteabschnitt (8) das erste Halteelement (5) und das komplementäre erste Halteelement (3) zusammenwirken und indem die Klinge (12) danach in den zweiten Halteabschnitt (9) eingeführt wird und dort das zweite Halteelement (6) und das komplementäre zweite Halteelement (2) zusammenwirken und das Werkzeug (7) gedreht wird und eine Drehbewegung des Werkzeugs (7) auf das Befestigungsmittel (4) übertragen wird und das Befestigungsmittel (4) in einem Körper befestigt wird.

9. Verfahren nach Anspruch 8,
**dadurch gekennzeichnet, dass** wenn sich das zweite Halteelement (6) vom komplementären zweiten Halteelement (2) löst, das erste Halteelemente (5) mit dem komplementären ersten Halteelement (3) im ersten Halteabschnitt (8) zusammenwirkt und ein Abfallen des Befestigungsmittels (4) vom Werkzeug (7) erschwert.

10. Verfahren nach Anspruch 8 oder 9,
**dadurch gekennzeichnet, dass** das Werkzeug (7) in einer S-förmigen Bewegung durch den ersten Halteabschnitt (8) geführt wird.

11. Verfahren nach Anspruch 8, 9 oder 10,
**dadurch gekennzeichnet, dass** das Werkzeug (7) in einer S-förmigen Bewegung, die auch eine translatorische Bewegung entgegen der Längsrichtung (L) umfasst, in den ersten Halteabschnitt (8) eingeführt wird.

12. Verfahren nach einem der Ansprüche 8 bis 11,
**dadurch gekennzeichnet, dass** die Klinge (12) zunächst in den ersten Halteabschnitt (8) und anschließend in den zweiten Halteabschnitt (9) eigeführt wird.

13. Verfahren nach einem der Ansprüche 8 bis 12,
**dadurch gekennzeichnet, dass** eine Schraube (4) als Befestigungsmittel gewählt wird und die Schraube (4) im Körper festgeschraubt wird.

## Claims

1. Arrangement with a tool (7) and with a fastening means (4) having a longitudinal direction (L), wherein the tool (7) is designed to screw the fastening means (4) into a body in the longitudinal direction (L); wherein the tool (7) has a blade (12) with a first holding element (5) and a second holding element (6), and the fastening means (4) has a first holding section (8) with a complementary first holding element (3) and a second holding section (9) with a complementary second holding element (2), and the second holding section (9) is arranged in the longitudinal direction (L) before the first holding section (8), and the blade (12) can be inserted into the fastening means (4), and in the first holding section (8) the first holding element (5) and the complementary first holding element (3) interact in such a way that a translatory movement of the blade (12) in the longitudinal direction (L) is blocked and thus it is difficult for the fastening means (4) to fall from the tool (7) by means of a backwards movement, and in the second holding section (9) the second holding element (6) and the complementary second holding element (2) interact in such a way that a rotary movement of the blade (12) can be transferred to the fastening means (4) and the fastening means (4) can be screwed into the body, **characterised in that** the blade (12) can be introduced into the fastening means (4) only if the first holding element (5) and the complementary first holding element (3) interact.

2. Arrangement according to claim 1, **characterised in that** an outer periphery of the second holding element (6) is formed as a polygon in a cross-section perpendicular to the longitudinal direction (L), and an internal periphery of the complementary second holding element (2) forms a complementary shape.

3. Arrangement according to claim 1 or 2, **characterised in that** the first holding element has a mandrel (5) and the first complementary holding element has a channel (3) running along an inner wall of the first holding section, along which the mandrel (5) can be guided during the insertion operation.

4. Arrangement according to claim 3, **characterised in that** a curve of the channel (3) is S-shaped.

5. Arrangement according to claim 3 or 4, **characterised in that** the channel (3) in the second holding section (9) runs in the longitudinal direction (L).

6. Arrangement according to any one of the preceding claims, **characterised in that** the mandrel (5) is arranged at one end of the blade (12).

7. Arrangement according to any one of the preceding claims, **characterised in that** the fastening means is formed as a screw (4).

8. Method for fastening a fastening means (4) with a longitudinal direction (L) with a tool (7) in a body, wherein the tool (7) has a blade (12) with a first holding element (5) and a second holding element (6), and
the fastening means (4) has a first holding section (8) with a complementary first holding element (3) and a second holding section (9) with a complementary second holding element (2),
wherein the blade (12) is introduced into the first holding section (8) in a non-translatory movement, and in the first holding section (8) the first holding element (5) and the complementary first holding element (3) interact,
and wherein the blade (12) afterwards is introduced into the second holding section (9) and there the second holding element (6) and the complementary second holding element (2) interact, and the tool (7) is rotated and a rotary movement of the tool (7) can be transferred to the fastening means (4) and the fastening means (4) can be screwed into a body.

9. Method according to claim 8, **characterised in that** when the second holding element (6) becomes loose from the complementary second holding element (2), the first holding element (5) interacts with the complementary first holding element (3) in the first holding section (8) and it is made difficult for the fastening means (4) to fall from the tool (7).

10. Method according to claim 8 or 9, **characterised in that** the tool (7) is guided in an S-shaped movement through the first holding section (8).

11. Method according to claim 8, 9 or 10, **characterised in that** the tool (7) is introduced into the first holding section (8) in an S-shaped movement which also comprises a translatory movement counter to the longitudinal direction (L).

12. Method according to any one of claims 8 to 11, **characterised in that** the blade (12) is introduced initially into the first holding section (8) and then into the second holding section (9).

13. Method according to any one of claims 8 to 12, **characterised in that** a screw (4) is selected as the fastening means and the screw (4) is firmly screwed into the body.

## Revendications

1. Agencement avec un outil (7) et avec un moyen de fixation (4) avec une direction longitudinale (L), cependant que l'outil (79 est configuré pour visser le moyen de fixation (4) dans la direction longitudinale (L) dans un corps, cependant que l'outil (7) présente une lame (12) avec un premier moyen de retenue (5) et un second moyen de retenue (6) et le moyen de fixation (4) présente une première portion de retenue (8) avec un premier élément de retenue complémentaire (3) et une seconde portion de retenue (9) avec un second élément de retenue complémentaire (2) et la seconde section de retenue (9) est placée dans la direction longitudinale (L) devant la première section de retenue (8) et la lame (12) peut être introduite dans le moyen de fixation (4) et le premier élément de retenue (5) et le premier élément de retenue complémentaire (3) coopèrent dans la première section de retenue (8) de telle manière qu'un mouvement de translation de la lame (12) est bloqué dans la direction longitudinale (L) et une chute du moyen de fixation (4) de l'outil (7) est ainsi rendue difficile par un mouvement de retour et le second élément de retenue (6) et le second élément de retenue complémentaire (2) coopèrent dans la seconde portion de retenue (9) de telle manière qu'un mouvement de rotation de la lame (12) peut être transféré au moyen de fixation (4) et le moyen de fixation (4) peut être vissé dans le corps, **caractérisé en ce que** la lame (12) ne peut être introduite dans la moyen de fixation (4) que lorsque le premier élément de retenue (5) et le premier élément de retenue complémentaire (3) coopèrent.

2. Agencement selon la revendication 1, **caractérisé en ce qu'**une circonférence extérieure du second élément de retenue (6) est configurée polygonale dans une section transversale perpendiculairement à la direction longitudinale (L) et une circonférence intérieure du second élément de retenue complémentaire (2) forme une forme complémentaire.

3. Agencement selon la revendication 1 ou 2, **caractérisé en ce que** le premier élément de retenue présente un mandrin (5) et le premier élément de retenue complémentaire présente une goulotte (3), qui s'étend le long d'une paroi intérieure de la première section de retenue, le long de laquelle le mandrin (5) peut être guidé pendant l'opération d'insertion.

4. Agencement selon la revendication 3, **caractérisé en ce qu'**un tracé de la goulotte (3) est configuré en forme de S.

5. Agencement selon la revendication 3 ou 4, **caractérisé en ce que** la goulotte (3) s'étend dans la seconde portion de retenue (9) dans la direction longitudinale (L).

6. Agencement selon l'une des revendications précédentes, **caractérisé en ce que** le mandrin (5) est placé à une extrémité de la lame (12).

7. Agencement selon l'une des revendications précédentes, **caractérisé en ce que** le moyen de fixation est configuré comme vis (4).

8. Procédé pour fixer un moyen de fixation (4) avec une direction longitudinale (L) avec un outil (7) dans un corps, cependant que l'outil (7) présente une lame (12) avec un premier moyen de retenue (5) et un second moyen de retenue (6) et le moyen de fixation (4) présente une première portion de retenue (8) avec un premier élément de retenue complémentaire (3) et une seconde portion de retenue (9) avec un second élément de retenue complémentaire (2), cependant que la lame (12) est introduite dans un mouvement qui n'est pas de translation dans la première section de retenue (8) et le premier élément de retenue (5) et le premier élément de retenue complémentaire (3) coopèrent dans la première section de retenue (8) et cependant que la lame (12) est ensuite introduite dans la seconde portion de retenue (9) et le second élément de retenue (6) et le second élément de retenue complémentaire (2) coopèrent dans celle-ci et l'outil (7) effectue une rotation et un mouvement de rotation de l'outil (7) étant transféré au moyen de fixation (4) et le moyen de fixation (4) étant fixé dans un corps.

9. Procédé selon la revendication 8, **caractérisé en ce que**, lorsque le second élément de retenue (6) se détache du second élément de retenue complémentaire (2), le premier élément de retenue (5) coopère avec le premier élément de retenue complémentaire (3) dans la première section de retenue (8) et une chute du moyen de fixation (4) de l'outil (7) est rendue difficile.

10. Procédé selon la revendication 8 ou 9, **caractérisé en ce que** l'outil (7) est guidé dans un mouvement en forme de S à travers la première section de retenue (8).

11. Procédé selon la revendication 8, 9 ou 10, **caractérisé en ce que** l'outil (7) est introduit dans la première section de retenue (8) dans un mouvement en forme de S qui comprend aussi un mouvement de translation à l'encontre de la direction longitudinale (L).

12. Procédé selon l'une des revendications 8 à 11, **caractérisé en ce que** la lame (12) est tout d'abord introduite dans la première section de retenue (8) et ensuite dans la seconde section de retenue (9).

13. Procédé selon l'une des revendications 8 à 12, **caractérisé en ce qu'**une vis (4) est choisie comme moyen de fixation et la vis (4) est vissée dans le corps.
